# EUROPEAN PATENT SPECIFICATION

(11) **EP 1 488 150 B1**
(45) Date of publication and mention of the grant of the patent: **31.03.2010**
(21) Application number: 03703567.2
(22) Date of filing: 29.01.2003
(51) Int. Cl.: F16K 31/00, F16B 1/00

(54) **COUPLING SET FOR COUPLING A FIRST UNIT TO A SECOND UNIT, AN ASSEMBLY AND A METHOD FOR COUPLING A FIRST UNIT TO A SECOND UNIT**
KOPPLUNGSSATZ ZUR KOPPLUNG EINER ERSTEN EINHEIT AN EINE ZWEITE EINHEIT, ANORNDUNG UND VERFAHREN ZUM KOPPELN EINER ERSTEN EINHEIT AN EINE ZWEITE EINHEIT
JEU D'ASSEMBLAGE D'UNE PREMIERE UNITE AVEC UNE SECONDE UNITE ET ENSEMBLE ET PROCEDE D'ASSEMBLAGE D'UNE PREMIERE UNITE AVEC UNE SECONDE UNITE

(30) Priority: 29.01.2002 SE 0200258
(43) Date of publication of application: 22.12.2004
(73) Proprietor: Aktiebolaget Somas Ventiler, S-661 23 Säffle (SE)
(72) Inventor: NILSSON, Curt Ove, S-661 43 SÄFFLE (SE)
(74) Representative: Johansson, Lars-Erik
(86) International application number: PCT/SE2003/000140
(87) International publication number: WO 2003/064904

(56) References cited:
- WO-A1-99/45310
- US-A- 3 232 568
- US-A- 4 719 939
- US-A- 4 887 634
- US-A- 5 564 461
- US-A- 6 135 417

## Description

### TECHNICAL FIELD

The present invention relates to a coupling set for coupling a first unit to a second unit. The invention also relates to a coupling element forming part of the coupling set according to the invention and an assembly comprising a first device and a second device, which first and second devices are coupled to one another by the coupling set according to the invention. Finally, the invention also relates to a method for coupling a first machine unit to a second machine unit.

### BACKGROUND TO THE INVENTION

In industrial plants, flows of gas and liquids must often be handled. In a paper mill, for example, it is necessary to be able to manage large flows of liquid. In such handling, valves with related actuators and auxiliary attachments for actuators are used. Valves are used in such a connection as stop valves, but also to control flows in pipelines and can then be fitted in between pipe flanges in a pipe system. An actuator is fitted on the valve to be connected to a revolving spindle for the valve. The actuator is the unit that is responsible for the valve body located inside the pipe being able to change position and thereby change the flow in the pipeline. With only actuators on the valve, the valve body's position can be either completely closed or fully open. There is thus no position in between and an arrangement of this kind is usually called a stop valve. Actuators are available in many different dimensions, a small actuator can weigh as little as 2 or 3 kg while an actuator intended for large valves can weigh up to 300 kg or more. The requirement in respect of the valve to which the actuator is coupled can vary within very wide limits. In some applications, the liquid flow can attain thousands of m³ per hour. In other applications, the liquid flow can be limited to a few ml per hour.

A positioner is an auxiliary attachment for actuators and is fitted in most cases on top of the actuator in order to be coupled to the turning motion of the actuator. The task of the positioner is to put the valve body in a desired position to control the flow in a pipeline. With a positioner fitted on an actuator, it is thus possible to put the valve body in an optional position from a completely closed valve to a fully open valve. Such an arrangement is usually called a control valve.

One way of explaining the aforementioned units simply is by comparison with an ordinary device like a tap in a washbasin. The tap then corresponds to the valve, the actuator can be compared to a hand that turns the tap and the brain that controls the movement of the hand, and thereby decides how much water shall run out of the tap, is equivalent to the positioner.

Auxiliary attachments for actuators can consist in practice of sensors, end position contacts or air ports, for example. Air ports are an attachment fitted to actuators in certain cases to distribute compressed air to the air chambers of the actuator in cases where air is used as a driving medium. Hydraulics, gas and electricity are also used as driving means for actuators. An auxiliary attachment for an actuator can also consist for example of an indicating box that only indicates the position or state of the actuator.

When an auxiliary attachment is to be coupled to an actuator, some type of fastening or coupling device is used. One such known coupling device consists of a bracket in the form of a bent plate with screw holes. The bent bracket requires a certain space (height) between the actuator and fastening device if it is to be possible to insert a screw. This previously known arrangement has certain disadvantages. In the first place, the assembly is high, which is unsuitable in an industrial environment where shaking and vibrations often occur, which in the worst case can cause vibrations or movements between the units and deviations and/or breaks between the actuator and the auxiliary attachment, which impairs the function. In the second place, it is difficult for a fitter to carry out the coupling. It is to be understood that installation often has to be carried out in places where the fitter is in a difficult working position. The pipeline in which the valve sits can be located high up on a wall or even run along the inside of a roof. It can then be difficult for the fitter to use both hands, as it can be necessary to use one hand to hold on.

It can be added that the prior art with a bracket in the form of a bent plate has been standardised to a certain extent so far that the bracket's screw holes have standardised distances between them. This standard is also applied to actuators and their auxiliary attachments. As these are provided with screw holes that have dimensions and a distance between them that correspond to the standard, actuators and auxiliary attachments from different manufacturers can be coupled to one another. Such a standard is called VDI/VDE 3845 and is quite common along manufacturers of actuators and auxiliary attachments. There is also a new proposal for an industrial standard from CEN (Comité Européen de Normalisation or the European Standardisation Committee).

Regarding the prior art, reference is also made to US patent specification 3,232,568, US patent specification 6,135,417, US patent specification 4,887,634, US patent specification 5,564,461, US patent specification 4,719,939 and WO-A-99/45310.

One object of the present invention is to provide a coupling device that permits a low and well-fixed assembly that is less sensitive to shaking, knocks and vibrations. Another object of the present invention is to provide a solution that permits assembly with just one hand. A further object is to provide an assembly that fulfils the aims stated above and a coupling element suitable for use in this context A further object is to provide a method for coupling a first unit to a second unit.

### DESCRIPTION OF THE INVENTION

The invention relates to an assembly that comprises an actuator, which actuator includes power means for acting on a machine unit, such as a valve, and a second machine unit. Power means suitable for the purpose can consist for example of one or more hydraulic or pneumatic cylinders. The second machine unit can be an auxiliary attachment for the actuator, for example a control unit for the actuator, which control unit is provided to control power means of the actuator. An auxiliary attachment for the actuator can also consist for example of an indicating box. The second machine unit can also consist of a valve, for example. Placed between the actuator and the second machine unit (for example, a control unit or a valve) is a platform/base element, through which platform the actuator is connected to the second machine unit (control unit/indicating box/valve etc.) The platform (base element) is provided with channels or though holes. Elongated coupling elements that are fastened in one of the actuator or the second machine unit extend through the platform's channels or though holes in a first direction. A locking element that engages with the elongated coupling elements is fitted detachably in such a way that it is movable away from the elongated coupling elements in a direction essentially perpendicular to the first direction. In the engagement position the locking element at best lies close to the platform/base element

The platform or base element can consist of or include a block or a box that is affixed directly to an actuator, for example. The elongated coupling elements suitably comprise screws with nuts that cannot be lost and the locking element at best consists of a securing plate with slots matched to the diameter of the screws. A first side of the securing plate then lies close to the platform, for example close to a block or the inside of a box, while the nuts lie close to a second side of the securing plate when the nuts are tightened. The nuts of the screws cannot be lost due to the fact that the screws have ends that are provided with a flattening, so that the diameter of the ends of the screws exceeds an inner diameter of the nuts. Alternatively, the nuts of the screws can be made impossible to lose in that the nuts are fixedly connected to the screws, each coupling element including a guide pin with inner threading that corresponds to the outer thread of the screw.

The platform (base element) is suitably provided with through holes. The screws of the coupling element are preferably provided with guide pins, the dimensions of which guide pins correspond to the dimensions of the through holes in the platform and the nuts of the screws have preferably an outer dimension that is less than the dimension of the holes, so that the nuts can be guided through the through holes of the platform.

The invention also relates to a coupling set for coupling a first machine unit to a second machine unit. It is to be understood in this case that each of the machine units can consist of a valve, an actuator or an auxiliary attachment for an actuator. The coupling set comprises a platform/base element, for example a block or a box, which platform is designed with one or more channels or through holes, a securing plate that is provided with one or more slots that can be made to coincide with the channels or through holes in the platform (base element) and which slots have a width along at least a part of their extension that is less than a dimension of the channel or through hole with which the slot is to coincide. Furthermore, the coupling set comprises one or more elongated coupling elements. The coupling elements are preferably designed so that each of the coupling elements comprises a screw and a nut belonging to the screw. The nut has an outer dimension that is less than the dimension of the platform's channels or through holes, so that the nuts can be guided through the channel/hole or channels/holes, the outer dimension of each nut exceeding the width of the slot when the slot coincides with the channel or hole in the platform belonging to the slot The securing plate is preferably arranged swivellably on the platform, the slot or slots being arranged so that the slot or slots can be caused to coincide with the channels or through holes in the platform by swivelling the securing plate.

The invention also relates to a coupling element comprising a screw provided with a nut, which screw has a middle part provided with a guide pin with an outer dimension. The screw has a threaded part that extends beyond the guide pin and has a diameter that is less than the outer dimension of the guide pin. The nut is a nut that cannot be lost with an outer dimension that is less than the outer dimension of the guide pin. The guide pin has preferably a smooth outer surface and an outer shape that is essentially circular-cylindrical, its diameter being greater than the outer dimension of the nut that cannot be lost.

The nut can be rotatable in relation to the screw, the end of the screw being provided with a flattening so that the outer diameter of the screw's end exceeds the inner diameter of the inner thread of the nut.

According to another embodiment, the coupling element can be divided into a first part that comprises a guide pin and a second part that comprises a screw with a fixedly connected nut that is thus not rotatable in relation to the screw. The guide pin of the coupling element has an inner thread in this case that corresponds to the outer thread of the screw.

It is perceived that the invention also includes a method for coupling a first machine unit to a second machine unit. More precisely, the invention includes a method for coupling a first machine unit in the form of an actuator to a second machine unit, which method comprises the following stages:

Providing an actuator that includes power means for acting on an external machine unit such as a valve, and providing a second machine unit.

The method according to the invention also includes providing a platform (a base element) that is provided with channels or through holes, the provision of one or more elongated coupling elements and the provision of at least one locking element that has a shape corresponding to the shape of the elongated coupling element or elements, so that the locking element can engage with the coupling element or coupling elements. Furthermore, the method according to the invention comprises coupling of either the actuator to the platform or coupling of the second machine unit to the platform, so that the platform together with either the actuator or the second machine unit forms a unit.

The coupling element or coupling elements are furthermore fastened in the unit of the actuator and the second machine unit that is not yet coupled to the platform. The platform is then guided towards the coupling element or elements in a first direction, so that the coupling element or coupling elements meet the through holes in the platform so that the coupling element or coupling elements pass through the holes in the platform until the platform lies close to the actuator or the second machine unit and a portion of the coupling element or coupling elements have passed fully through the through holes in the platform. The locking element is then guided in a direction perpendicular to the first direction, so that the locking element is thereby made to lie close to the platform/base element and at the same time engage with a part of the coupling element or coupling elements that have passed through the through holes in the platform, so that the platform is thereby prevented from being guided back in the opposite direction to the first direction. The actuator, platform and the second machine unit thereby form an assembly.

### BRIEF DESCRIPTION OF DRAWINGS

- Fig. 1: shows a block forming part of a coupling set
- Fig. 2: shows an alternative to the block shown in Fig. 1
- Fig. 3a and 3b: show the design of a coupling element according to the invention
- Fig. 4: shows a possible design of a securing plate according to the invention
- Fig. 5a and 5b: show how an auxiliary attachment is coupled to an actuator using a coupling device according to an embodiment of the invention
- Fig. 6: shows how an auxiliary attachment is coupled to an actuator according to a second embodiment of the invention
- Fig. 7: shows an example of prior art
- Fig. 8: shows how an actuator is coupled to a valve according to a further embodiment of the invention
- Fig. 9: shows a further embodiment of the invention
- Fig. 10: shows a component of the embodiment shown in Fig. 9
- Fig. 11: shows a further component of the embodiment shown in Fig. 9.

### DETAILED DESCRIPTION OF THE INVENTION

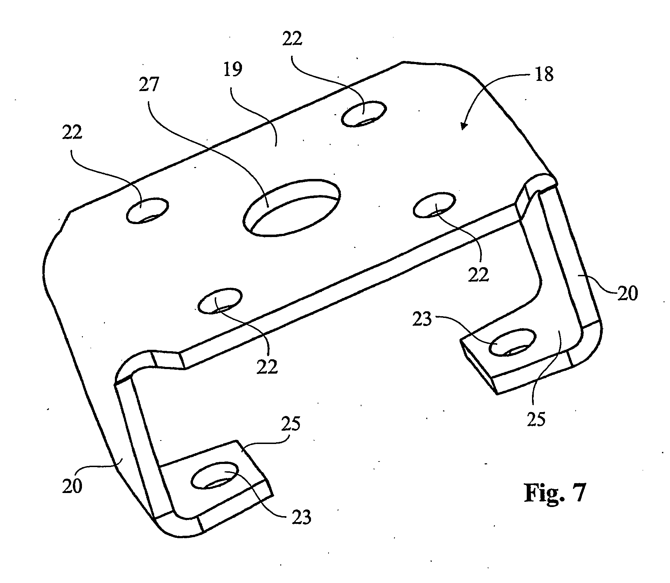

With reference to Fig. 7, an example is shown of the prior art in the field. A bracket 18 consists of a plate 19 with screw holes 22 for attaching the bracket to a first machine unit, such as an auxiliary attachment for an actuator, for example. The bracket 18 is bent so that it has legs 20 with feet 25 that are parallel to the plate 19 and provided with screw holes 23 for fastening the bracket to another machine unit such as an actuator, for example. A hole 27 permits a rotating spindle to pass through the bracket. On installation, the bracket can first be screwed tight to the actuator, following which the auxiliary attachment is placed on the bracket The fitter can insert screws into the space between the plate 19 and the feet 25 for attaching the bracket 18 to the auxiliary attachment It is perceived that this is difficult to do with one hand, especially if the fitter is already in an uncomfortable working position. The high assembly also gives a greater risk of movements and ruptures.

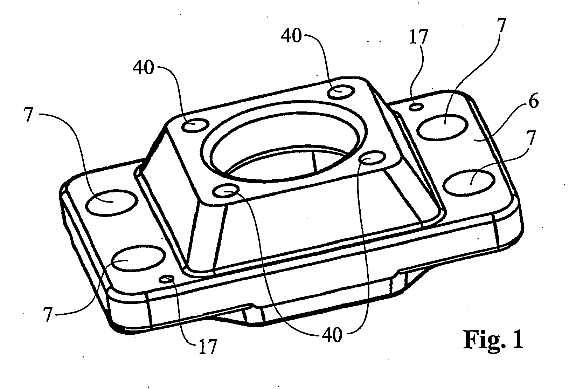

With reference to Fig. 1, Fig. 5b, Fig. 6 and Fig. 8, an assembly 1 according to the invention is shown that comprises an actuator 2, which actuator 2 includes power means for acting on a machine unit / a machine element such as a valve. The assembly also comprises an auxiliary attachment 5 for the actuator 2, which auxiliary attachment can consist of an indicating box, for example, or a control unit 5 for the actuator 2. If the auxiliary attachment 5 consists of a control unit 5, this is provided to control the actuator's power means. Placed between the actuator 2 and the auxiliary attachment 5 is a platform 6 (a base element 6), through which platform 6 the actuator 2 is connected to the auxiliary attachment 5. The platform 6, which can consist of a block 6 or a box 6, is provided with channels or through holes 7. Elongated coupling elements 8, which are fastened in one of the actuator 2 or the auxiliary attachment 5, extend through the channels or through holes 7 in the block 6 in a first direction. The coupling elements 8 are fastened at one end in the actuator 2. A locking element 9 that engages with the elongated coupling elements 8 and is fitted detachably in such a way that it is movable away from the elongated coupling elements 8 in a direction chiefly perpendicular to the first direction. The elongated coupling elements 8 preferably comprise screws 10 with nuts 11 that cannot be lost and the locking element 9 consists preferably of a securing plate 9 with slots 12 matched to the diameter of the screws 10, a first side of the securing plate 9 lying close to the platform 6 and the nuts 11 lying close to a second side of the securing plate 9 when the nuts are tightened. The platform 6 is preferably provided with through holes 7 and the screws 10 of the coupling elements 8 are preferably provided with guide pins 15, the dimensions of which guide pins 15 correspond to the dimensions of the holes 7. The nuts 11 of the screws 10 have an outer dimension that is less than the dimensions of the holes 7, so that the nuts 10 can be guided through the through holes 7 of the platform 6. In addition to the screw 10 or the threaded part 10, the coupling elements 8 are also provided with a further screw part or threaded part 31, with which the coupling elements 8 can be screwed tight into the screw holes 26 in the actuator 2. In addition to the through holes 7 for the coupling elements 8, the platform 6 is provided with through holes 40 and the auxiliary attachment (for example a control unit or an indicating box) is provided with screw holes 42. The platform 6 can thereby be fastened to the auxiliary attachment 5 with screws 41 that go through the through holes 42 and into the threaded screw holes 42 in the control unit 5. It is perceived that the invention can also be realised in the form of an assembly 1 consisting of an actuator 2 coupled to some type of machine unit other than what has been indicated above, for example a valve 4.

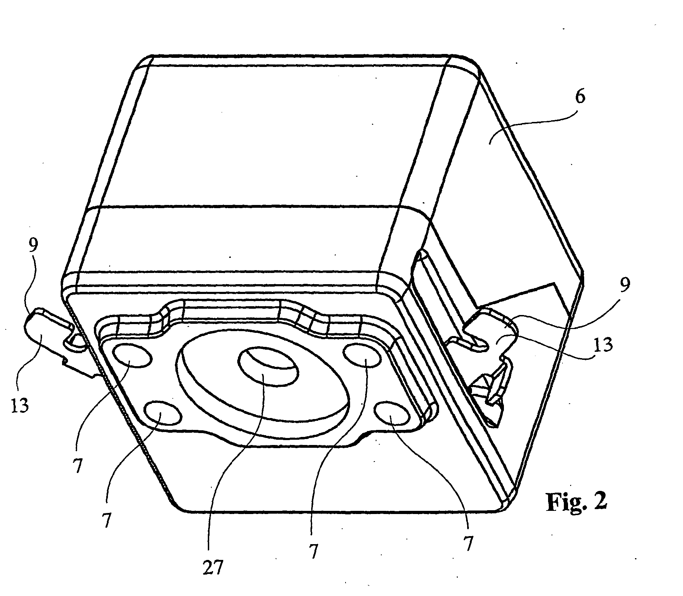

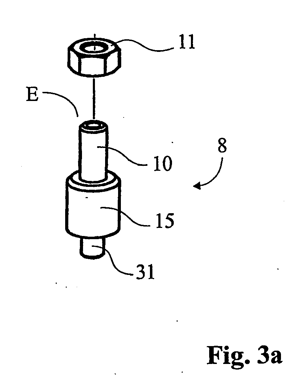

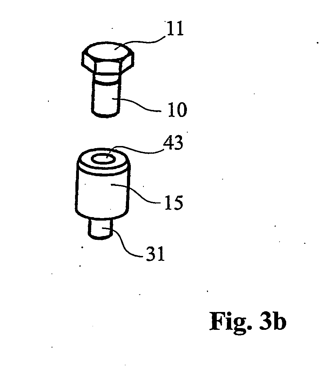

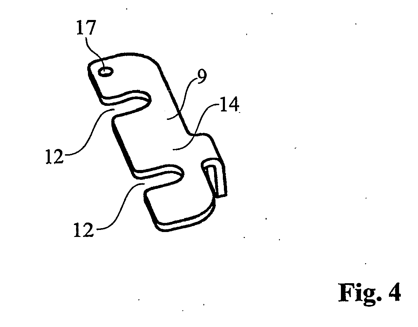

The invention also relates to a coupling set for coupling a first machine unit to a second machine unit, which coupling set comprises a platform 6 with one or more though holes 7. The platform consists at best of a block or a box 6. In Fig. 1, the platform is shown in the form of a block 6 with through holes 7. Fig. 2 shows the platform as a box 6 with through holes 7. The box 6 can suitably contain a machine unit, such as an auxiliary attachment / a control unit for an actuator, assembled with the box in advance. The coupling set also includes a securing plate 9 that is shown in greater detail in Fig. 4. The securing plate 9 is provided with one or more slots 12 that can be made to coincide with the through holes in the platform 6 and which slots 12 have a width along at least a part of their extension that is less than a dimension of the through hole 7 with which the slot is to coincide. Furthermore, the coupling set comprises one or more elongated coupling elements 8 that can best be seen in Fig. 3a and 3b. In a preferred embodiment of the invention, each coupling element 8 contains a screw 10 and a nut 11 belonging to the screw 10, the nut 11 having an outer dimension that is less than the dimension of the through holes 7 in the platform 6, so that the nuts 11 can be guided through the holes 7. The outer dimension of each nut 11 exceeds the width of the slot 12 when the slot 12 is in such a position that it coincides with the through hole 7 pertaining to the slot 12 in the platform 6 or base element 6. The securing plate 9 is preferably arranged swivellably on the platform 6 by means of a hinged connection 17 that can consist of a pin that goes through holes 17 in the securing plate 9 and the platform 6. The slot 12 or slots 12 are arranged so that the slot or slots 12 can be made to coincide with the through holes 7 in the platform 6 due to swivelling of the securing plate 9 about the hinge 17. It is perceived that the coupling set according to the invention is primarily conceived to be used in connection with the method according to the invention and thus also forms part of the assembly according to the invention.

The invention also relates to the actual coupling element 8 as such. In a preferred embodiment that is most plainly evident in Fig. 3a and Fig. 3b, this can comprise a screw 10 provided with a nut 11. The screw 10 has a central part provided with a guide pin 15 with an outer dimension. The screw 10 has a threaded part that extends beyond the guide pin 15 and has a diameter that is less than the outer dimension of the guide pin 15 and the nut 11 is a nut 11 that cannot be lost with an outer dimension that is less than the outer dimension of the guide pin. The guide pin 15 best has a smooth outer surface and an essentially circular-cylindrical outer shape as well as a diameter that is greater than the outer dimension of the nut 11 that cannot be lost

In the embodiment shown in Fig. 3a, the nut 11 is rotatable in relation to the screw 10. The end E of the screw 10, however, has been provided with a flattening so that the outer diameter of the end of the screw 10 exceeds the inner diameter of the inner thread of the nut 11. The nut 11 thus becomes a nut 11 that cannot be lost. Over and above the screw part 10, the coupling element 8 has a further screw part / threaded part 31 for screwing the coupling element 8 into a unit such as an actuator 2. Naturally, the coupling element can conceivably be fastened in a manner other than by a threaded part 31, but such a threaded part is a simple and practical solution that can be applied easily to existing units that often have screw holes for a bracket. There is thus a screw part or threaded part 10, 31 on both sides of the guide pin 15. The two screw parts 10, 31 lie preferably along the same longitudinal axis but can be of a different dimension. In Fig. 3a, the nut 11 is shown separate from the rest of the coupling element 8. It is perceived, however, that the nut 11 sits on the screw 10 inside the flattened end E.

Fig. 3b shows another execution of a coupling element 8 with a nut 11 that cannot be lost In this embodiment, the coupling element 8 is divided into a first part that includes a guide pin 15 and a second part that includes the screw 10 with the nut 11. The nut 11 here is fixedly connected to the screw 10 and is thus not rotatable in relation to the screw 10. The guide pin 15 of the coupling element 8 here has an inner screw threading 43 that corresponds to the outer thread of the screw 10, so that the screw 10 can be screwed to the guide pin 15. In this embodiment also the coupling element 8 has a further threaded part 31 for screwing the coupling element 8 into a unit such as an actuator 2, for example, or a valve. When the coupling element 8 according to this embodiment is assembled, the screw parts 10, 31 are located on either side of the guide pin 15. An alternative to a further threaded part 31 could consist for example in a solution in which the coupling elements 8 are fixedly connected to an actuator, for example.

It is to be understood that the coupling element 8 could be used also in applications other than those shown in this patent application and to connect also other types of elements and units than those shown in this application. It is also to be understood that the applicant reserves the right to present independent claims regarding the actual coupling element 8 as such.

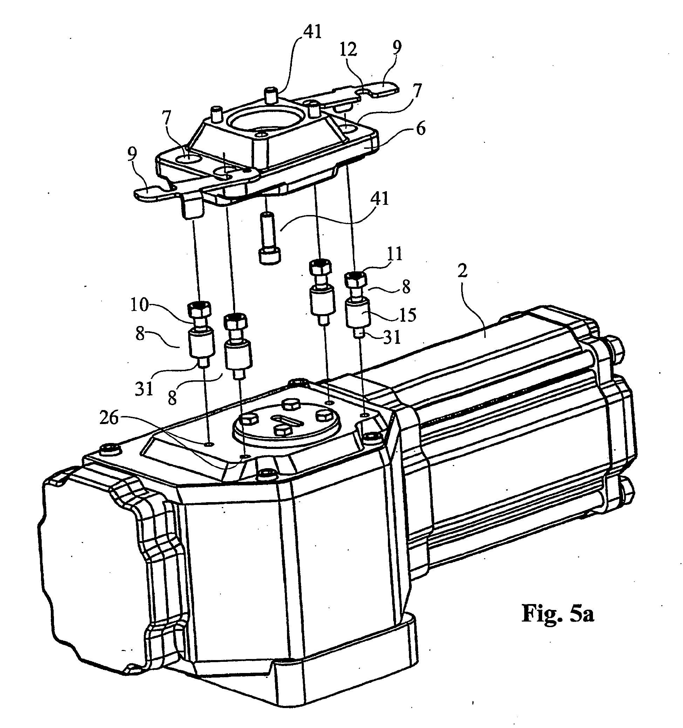

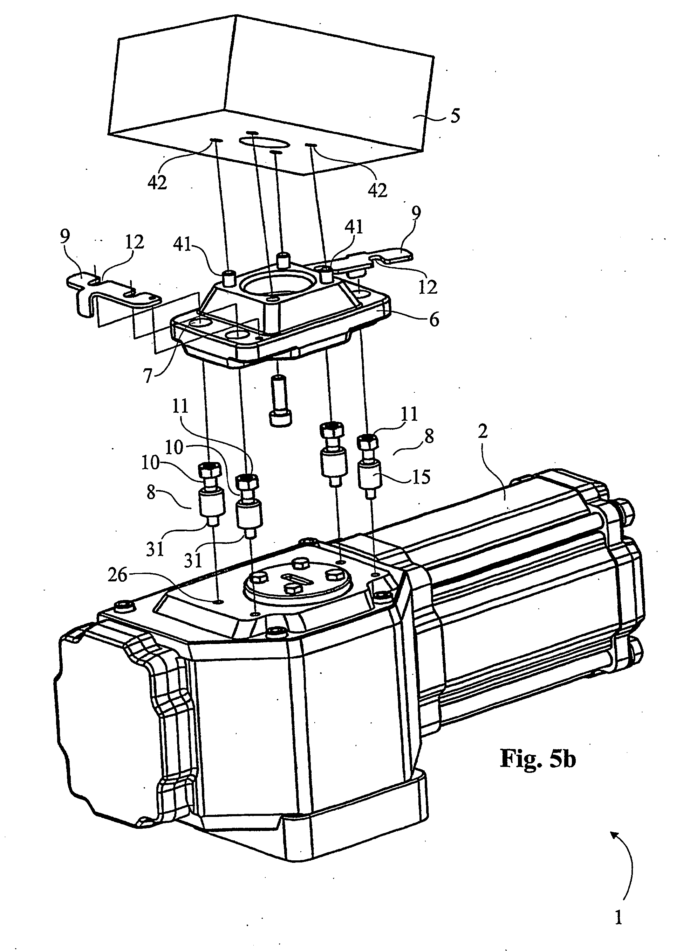

The function of the invention is now to be explained with reference to the enclosed figures. An auxiliary attachment in the form of a control unit 5, for example, is to be fastened to an actuator 2, see Fig. 5a and Fig. 5b. In a first stage, the coupling elements 8 are anchored at fastening points 26 in the actuator 2. The fastening points 26 can consist for example of screw holes 26, the coupling elements 8 being screwed firmly into the screw holes 26 using their threaded part 31. A platform 6, shown here as a block, is then placed on the actuator 2 so that the coupling elements 8 anchored in the actuator 2 go through the through holes 7 in the block 6. The guide pins 15 of the coupling elements 8 have essentially the same diameter as the diameter of the through holes 7 and fix the block 6 laterally. The screw part of the coupling elements with the nuts 11 that cannot be lost has a smaller outer dimension than the through holes and therefore passes through these with ease, but is thus unable to lock the block 6 to the actuator 2 in the longitudinal direction of the coupling element 8 (the block can be lifted off quite easily). The fitter can now swivel the securing plate 9 about its hinge 17 with one hand, so that the slots 12 in the securing plate 9 receive the coupling elements 8 and are made to coincide with the through holes 7 in the block 6. It is thus understood hereby that each coupling element 8 goes through a through hole 7 in the block 6 and further through a slot 12 in the securing plate 9. The securing plate 9 is located in this position between the block 6 and the nut 11 that cannot be lost. If it is attempted in this position to lift the block 6 up from the actuator, the securing plate 9 will run against the nut. The block 6 thus has a definite fixing in the longitudinal direction of the coupling elements 8 also. It is perceived that there is a securing plate 9 on at least two opposing sides of the block 6, as is clear from Fig. 5a, and that naturally both securing plates 9 are used. Once the securing plate 9 has been swivelled into the locking position, the fitter can tighten the nuts 11 until these lie close to the upper side 14 of the securing plate 9 at the same time as the lower side 13 of the securing plate 9 lies close to the block 6. As suggested in Fig. 5b, it is possible advantageously to fit an auxiliary attachment such as a control unit 5, for example, to the block before this is attached to the actuator 2, for example in that the block 6 is screwed tightly by screws 41 into the control unit 5, which is provided with threaded holes 42 for the screws 41.

It is to be understood that the hinge 17 does not need to be arranged in the manner shown in the figures, but that it could be arranged such that the securing plate 9 was disposed to turn in a plane perpendicular to the plane of rotation evident from Fig. 5a and Fig. 5b. In an embodiment of this kind also, the securing plate 9 should move in at least one final phase of its swivelling movement in a direction essentially perpendicular to the longitudinal direction of the elongated coupling elements 8. The variant shown in Fig. 5a and 5b can however be regarded as constituting an advantageous embodiment.

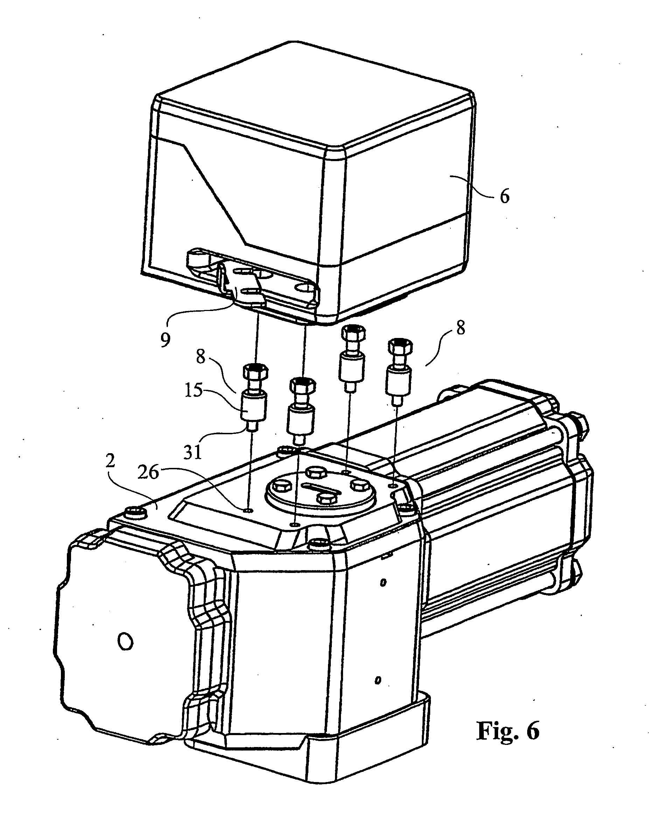

With reference to Fig. 2 and Fig. 6, an embodiment of the invention is shown in which the platform or base element comprises or consists of a box 6 that contains a machine unit, for example an auxiliary attachment for an actuator 2, so that the box 6 and the auxiliary attachment form a module ready for installation.

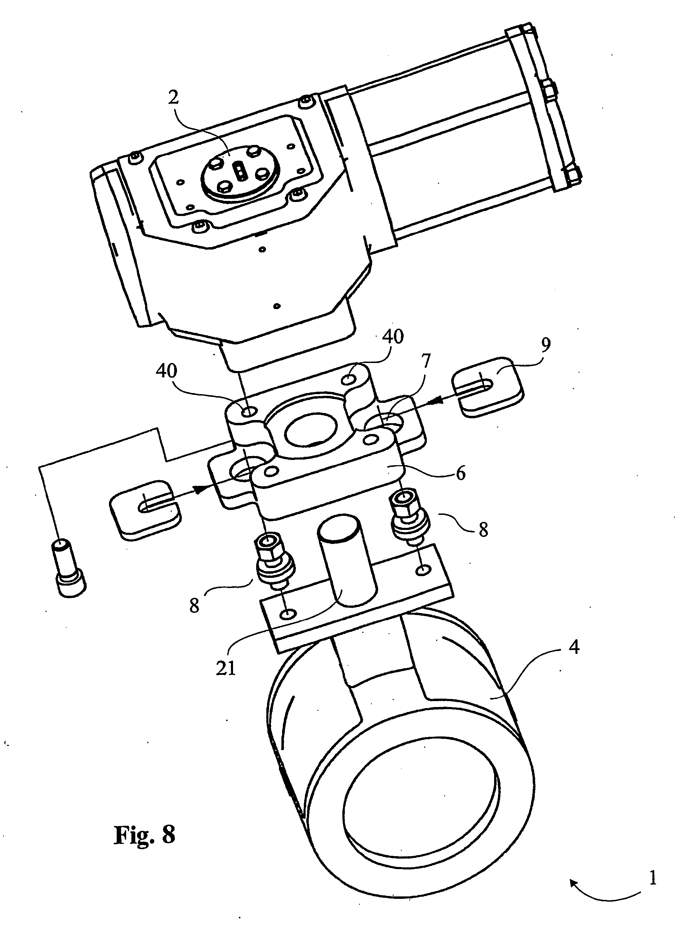

With reference to Fig. 8, a somewhat different embodiment of the invention is shown. In the figure, it is shown how an actuator 2 can be attached to a valve 4 via a block 6. The securing plate 9 is not arranged swivellably here but consists of a loose plate. The block 6 here has only two through screw holes 7 for the coupling elements 8. A rotating spindle 21 goes through an opening 27 in the block 6. This embodiment also permits low assembly and installation with one hand.

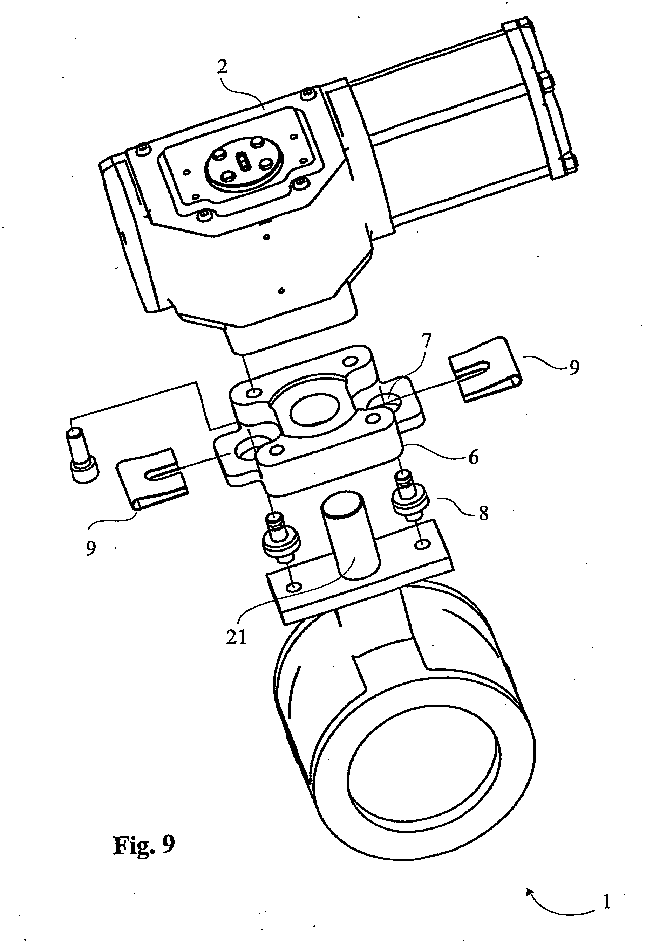

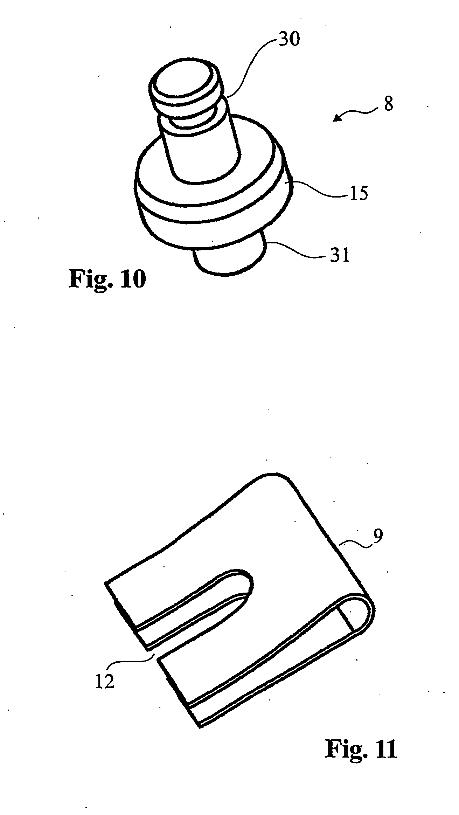

Fig. 9 shows a further embodiment of the invention. The embodiment shown in Fig. 9 has great similarities to the embodiment shown in Fig. 8. In the embodiment shown in Fig. 9, however, the locking element/securing plate 9 consists of a spring element and the coupling elements 8 here include an end that is provided with a groove 30. The spring element is shown on a larger scale in Fig. 11 and the corresponding coupling element 8 is shown on a larger scale in Fig. 10. This embodiment of the invention functions in such a way that the platform 6 is lowered over the coupling elements 8 in a first direction so that the coupling elements 8 go through the through holes 7 in the platform 6. The spring element 9 is then guided in a second direction perpendicular to the first direction, towards the coupling element 8 until the edges of the slot 12 in the spring element 9 engage in the groove 30. When the spring element 9 lies close to the platform 6 and is in engagement with the coupling element 8, the platform is locked tightly in a form-fit manner to a machine unit such as a valve 4, for example, an actuator 2 or a control unit 5. In this embodiment also the coupling element has a threaded part 31 for screwing the coupling element 8 down so that the coupling element 8 can thereby be attached to a machine unit, for example an actuator or a valve.

It is expedient for the placing and dimension of the platform's screw holes to conform to the already established industrial standard that is applied to brackets. For example, the screw holes in the platform can have dimensions and a distance between them that conform to the industrial standard VDI/VDE 3845. It is also conceivable for the platform's screw holes to have dimensions and a distance between them that conform to the CEN standard. The advantage is thereby achieved that the invention can be applied to existing machine units.

The invention facilitates a low assembly in which the platform of the coupling device can have a close contact both with a first machine unit such as an actuator and a second machine unit such as an auxiliary attachment. If a solid body lies close to both the first and the second machine unit without an intermediate cavity that a fitter has to access to apply screws, the height of the assembly can be reduced. The invention removes the need for an intermediate cavity, since with the present invention it is possible to place the coupling elements/screws on the side of the platform that is used for coupling, instead of the screws being placed centrally in a position where they are wholly or partly enclosed by an element such as a bracket, for example, according to the prior art. Due to the low assembly according to the invention, the sensitivity to shaking and vibrations is reduced. In addition, the invention makes it easier for a fitter to use just one hand. The nuts that cannot be lost eliminate messing about with loose nuts and thereby help to make the work of the fitter easier. In the embodiment in which the coupling elements comprise pins with grooves, it is possible to completely avoid handling nuts.

It is to be understood that what has been shown above is only an example of possible embodiments of the invention. The invention is thus not restricted to what has been shown above, but can be varied within the scope of the following claims.

## Claims

1. An assembly (1) that comprises:
a) a first machine unit in the form of an actuator (2), which actuator (2) comprises power means for acting on a machine unit such as a valve and;
b) a second machine unit (4, 5) such as a control unit (5), for example, for the actuator (2) or a valve (4);
c) a platform (6) placed between the actuator (2) and the second machine unit (4, 5), through which platform (6) the actuator (2) is connected to the second machine unit (4, 5) so that the platform (6) is connected to both the actuator (2) and the second machine unit (4, 5) and which platform (6) is provided with channels or through holes (7);
d) elongated coupling elements (8), which are fastened in one of the actuator (2) or the second machine unit (4, 5) and extend through the platform's (6) channels or through holes (7) in a first direction;
e) a locking element (9) that engages with one or more elongated coupling elements (8) and is fitted detachably in such a way that it is movable away from the elongated coupling element or elements (8) in a direction chiefly perpendicular to the first direction, so that the locking element (9) and coupling element or coupling elements (8) connect the platform (6) to one of the actuator (2) and second machine unit (4, 5) as long as the locking element (9) engages with the coupling element or coupling elements (8).

2. An assembly (1) according to claim 1, **characterised in that** the elongated coupling elements (8) comprise screws (10) with nuts (11) that cannot be lost and **in that** the locking element (9) consists of a securing plate (9) with slots (12) matched to the diameter of the screws (10), a first side (13) of the securing plate (9) lying close to the platform (6) and the nuts (11) lying close to a second side (14) of the securing plate (9) when the nuts are tightened.

3. An assembly (1) according to claim 2, **characterised in that** the platform (6) is provided with through holes (7) and **in that** the screws (10) of the coupling elements (8) are provided with guide pins (15), the dimensions of which guide pins (15) correspond to the dimensions of the holes (7) and **in that** the nuts (11) of the screws (10) have an outer dimension that is less than the dimensions of the holes (7), so that the nuts (11) can be guided through the through holes (7) of the platform (6).

4. An assembly according to claim 1, **characterised in that** the locking element (9) lies close to the platform (6) when the locking element (9) is in the engagement position with one or more of the coupling elements (8).

5. An assembly according to claim 2, **characterised in that** the nuts (11) of the screws cannot be lost **in that** the screws (10) have ends that are provided with a flattening, so that the diameter of the ends of the screws (10) exceeds an inner diameter of the nuts (11).

6. An assembly according to claim 2, **characterised in that** the nuts (11) of the screws (10) cannot be lost **in that** the nuts (11) are fixedly connected to the screws (10) and that each coupling element (8) comprises a guide pin (15) with inner threading that corresponds to the outer thread of the screw (10).

7. A coupling set for coupling a first machine unit to a second machine unit, which coupling set comprises a platform (6) with one or more channels or through holes (7), a securing plate (9) that is provided with one or more slots (12) that can be made to coincide with the channels or through holes of the platform (6) and which slots (12) have a width along at least a part of their extension that is less than a dimension of the channel or through hole (7) with which the slot is to coincide, and one or more elongated coupling elements (8), which coupling elements (8) each comprise a screw (10) and a nut (11) belonging to the screw (10), the nut (11) having an outer dimension that is less than the dimension of the channels or through holes (7) in the platform (6), so that the nuts (11) can be guided through the channel/channels (7) or hole/holes (7) and the outer dimension of each nut (11) exceeding the width of the slot when the slot (12) coincides with the channel or through hole (7) pertaining to the slot (12) in the block (6), so that the securing plate (9) can engage with the coupling element or coupling element (8).

8. Coupling set according to claim 7, **characterised in that** the securing plate (9) is arranged swivellably on the platform (6), the slot (12) or slots (12) being arranged so that the slot or slots (12) can be made to coincide with the channels or through holes (7) in the platform by swivelling the securing plate (9).

9. Coupling set according to claim 7, **characterised in that** the securing plate (9) consists of an element that is detached from the platform (6).

10. Coupling set according to any of claims 7-9, **characterised in that** the coupling set is designed so that the securing plate (9) lies close to the platform (6) when the securing plate (9) is in such a position that its slot or slots (12) coincide with the channels or through holes (7) in the platform (6).

11. Method for coupling a first machine unit in the form of an actuator (2) to a second machine unit (4, 5), which method comprises the following stages:
a) providing an actuator (2) that includes power means for acting on an external machine unit such as a valve (4);
b) providing a second machine unit (4, 5);
c) providing a platform (6) that is provided with channels or through holes (7);
d) providing one or more elongated coupling elements (8);
e) providing at least one locking element (9) that has a shape corresponding to the shape of the elongated coupling element or coupling elements (8), so that the locking element (9) can engage with the coupling element or coupling elements (8);
f) coupling of either the actuator (2) to the platform (6) or the second machine unit (4, 5) to the platform (6) so that the platform (6) together with either the actuator (2) or the second machine unit (4, 5) forms a unit;
g) fastening of the coupling element or coupling elements (8) in the unit of the actuator (2) and the second machine unit (4, 5) that is not yet coupled to the platform (6);
h) guiding of the platform (6) towards the coupling element or coupling elements (8) in a first direction so that the coupling element or coupling elements (8) meet the channels or the through holes (7) in the platform (6), the coupling element or coupling elements (8) passing through the channels or holes (7) until the platform (6) lies close to the actuator (2) or the second machine unit (4, 5) and a portion of the coupling element or coupling elements (8) has passed fully through the channels or through holes (7) in the platform;
i) guiding of the locking element (9) in a direction perpendicular to the first direction so that the locking element (9) is thereby made to lie against the platform (6) and at the same time engage with a part of the coupling element or coupling elements (8) that have passed through the channels or through holes in the platform (6), so that the platform (6) is thereby prevented from being guided back in the opposite direction to the first direction so that the actuator (2), platform (6) and the second machine unit (4, 5) thereby form an assembly.

## Patentansprüche

1. Baugruppe (1), die Folgendes umfasst:
a) eine erste Maschineneinheit in der Form eines Aktuators (2), der ein kraftbetriebenes Element zur Einwirkung auf eine Maschineneinheit, beispielsweise ein Ventil, umfasst, und
b) eine zweite Maschineneinheit (4, 5), wie eine Steuereinheit (5), beispielsweise, für den Aktuator (2) oder ein Ventil (4);
c) eine Plattform (6), die zwischen dem Aktuator (2) und der zweiten Maschineneinheit (4, 5) platziert ist, wobei der Aktuator (2) über die Plattform (6) mit der zweiten Maschineneinheit (4, 5) verbunden ist, sodass die Plattform (6) sowohl mit dem Aktuator (2), als auch mit der zweiten Maschineneinheit (4, 5) verbunden ist, und wobei die Plattform (6) mit Kanälen oder Durchgangslöchern (7) versehen ist;
d) längliche Verbindungselemente (8), die entweder am Aktuator (2) oder an der zweiten Maschineneinheit (4, 5) befestigt sind und durch die Kanäle oder die Durchgangslöcher (7) der Plattform (6) in einer ersten Richtung verlaufen;
e) ein Verriegelungselement (9), das in eines oder mehrere der länglichen Verbindungselemente (8) eingreift und abnehmbar so montiert ist, dass es von dem länglichen Verbindungselement oder den Elementen (8) in einer hauptsächlich senkrecht zur ersten Richtung verlaufenden Richtung wegbewegt werden kann, sodass das Verriegelungselement (9) und das Verbindungselement oder die Verbindungselemente (8) die Plattform (6) mit dem Aktuator (2) oder der zweiten Maschineneinheit (4, 5) verbinden, solange sich das Verriegelungselement (9) im Eingriff mit dem Verbindungselement oder den Verbindungselementen (8) befindet.

2. Baugruppe (1) nach Anspruch 1, **gekennzeichnet dadurch, dass** die länglichen Verbindungselemente (8) Schrauben (10) mit Muttern (11) enthalten, die nicht verlorengehen können, sowie **dadurch**, dass das Verriegelungselement (9) aus einer Sicherungsplatte (9) mit dem Durchmesser der Schrauben (10) angepassten Nuten (12), einer dicht an der Plattform (6) befindlichen ersten Seite (13) der Sicherungsplatte (9) sowie dicht an einer zweiten Seite (14) der Sicherungsplatte (9) befindlichen Muttern (11) besteht, wenn die Muttern festgezogen sind.

3. Baugruppe (1) nach Anspruch 2, **gekennzeichnet dadurch, dass** die Plattform (6) mit Durchgangslöchern (7) ausgestattet ist, sowie **dadurch**, dass die Schrauben (10) der Verbindungselemente (8) mit Führungsstiften (15) ausgestattet sind, deren Abmessungen denen der Löcher (7) entsprechen, sowie **dadurch**, dass der Außendurchmesser der Muttern (11) der Schrauben (10) kleiner als die Abmessungen der Löcher (7) ist, sodass die Muttern (11) durch die Durchgangslöcher (7) der Plattform (6) geführt werden können.

4. Baugruppe nach Anspruch 1, **gekennzeichnet dadurch, dass** sich das Verriegelungselement (9) dicht an der Plattform (6) befindet, wenn es sich in der Eingriffsposition mit einem oder mehreren der Verbindungselemente (8) befindet.

5. Baugruppe nach Anspruch 2, **gekennzeichnet dadurch, dass** die Muttern (11) der Schrauben deshalb nicht verlorengehen können, weil die Schrauben (10) mit einer Abflachung versehene Enden aufweisen, sodass der Durchmesser der Enden der Schrauben (10) einen Innendurchmesser der Muttern (11) überschreitet.

6. Baugruppe nach Anspruch 2, **gekennzeichnet dadurch, dass** die Muttern (11) der Schrauben (10) deshalb nicht verlorengehen können, weil die Muttern (11) unbeweglich mit den Schrauben (10) verbunden ist, sowie **dadurch**, dass jedes Verbindungselement (8) einen Führungsstift (15) mit einem Innengewinde umfasst, der mit dem Außengewinde der Schraube (10) korrespondiert.

7. Verbindungs-Set zum Verbinden einer ersten Maschineneinheit mit einer zweiten Maschineneinheit, wobei das Verbindungs-Set Folgendes umfasst: eine Plattform (6) mit einem oder mehreren Kanälen oder Durchgangslöchern (7), eine Sicherungsplatte (9), die mit einer oder mehreren Nuten (12) ausgestattet ist, die so ausgeführt werden können, dass sie sich mit den Kanälen oder Durchgangslöchern der Plattform (6) decken, wobei die Breite der Nuten (12) entlang von mindestens einem Teil ihres Verlaufs kleiner als eine Abmessung des Kanals oder Durchgangslochs (7) ist, mit dem sich die Nut decken soll, und ein oder mehrere längliche Verbindungselemente (8), die jeweils eine Schraube (10) und eine zur Schraube (10) gehörende Mutter (11) umfassen, wobei der Außendurchmesser der Mutter (11) kleiner als die Abmessung der Kanäle oder Durchgangslöcher (7) in der Plattform (6) ist, sodass die Muttern (11) durch den Kanal / die Kanäle (7) oder das Loch / die Löcher (7) geführt werden können, und die Außenabmessung jeder Mutter (11) die Breite der Nut überschreitet, wenn sich die Nut (12) mit dem zur Nut (12) im Block (6) befindlichen Kanal oder Durchgangsloch (7) deckt, sodass die Sicherungsplatte (9) in Eingriff mit dem Verbindungselement oder den Verbindungselementen (8) kommen kann.

8. Verbindungs-Set nach Anspruch 7, **gekennzeichnet dadurch, dass** die Sicherungsplatte (9) schwenkbar an der Plattform (6) angeordnet ist, die Nut (12) oder die Nuten (12) so angeordnet ist bzw. sind, dass sie sich mit den Kanälen oder Durchgangslöchern (7) in der Plattform decken, wenn die Sicherungsplatte (9) entsprechend geschwenkt wird.

9. Verbindungs-Set nach Anspruch 7, **gekennzeichnet dadurch, dass** die Sicherungsplatte (9) aus einem Element besteht, das von der Plattform (6) losgelöst ist.

10. Verbindungs-Set nach einem der Ansprüche 7-9, **gekennzeichnet dadurch, dass** das Kupplungs-Set so gestaltet ist, dass sich die Sicherungsplatte (9) dicht an der Plattform (6) befindet, wenn die Sicherungsplatte (9) eine Position hat, in der sich ihre Nut oder ihre Nuten (12) mit den Kanälen oder Durchgangslöchern (7) in der Plattform (6) deckt bzw. decken.

11. Verfahren zum Verbinden einer ersten Maschineneinheit in der Form eines Aktuators (2) mit einer zweiten Maschineneinheit (4, 5) wobei dieses Verfahren die folgenden Stufen umfasst:
a) Bereitstellen eines Aktuators (2), der ein kraftbetriebenes Element zur Einwirkung auf eine externe Maschineneinheit, beispielsweise ein Ventil (4), umfasst;
b) Bereitstellen einer zweiten Maschineneinheit (4, 5);
c) Bereitstellen einer Plattform (6), die mit Kanälen oder Durchgangslöchern (7) versehen ist;
d) Bereitstellen eines oder mehrerer länglicher Verbindungselemente (8);
e) Bereitstellen von mindestens einem Verriegelungselement (9), dessen Form mit der Form des länglichen Verbindungselements oder der länglichen Verbindungselemente (8) korrespondiert, sodass das Verriegelungselement (9) mit dem Verbindungselement oder den Verbindungselementen (8) in Eingriff kommen kann;
f) Verbinden des Aktuators (2) mit der Plattform (6) oder der zweiten Maschineneinheit (4, 5) mit der Plattform (6), sodass die Plattform (6) gemeinsam mit dem Aktuator (2) oder der zweiten Maschineneinheit (4, 5) eine Einheit bildet;
g) Befestigen des Verbindungselements oder der Verbindungselemente (8) in der vom Aktuator (2) und der zweiten Maschineneinheit (4, 5) gebildeten Einheit, die noch nicht mit der Plattform (6) verbunden ist;
h) Führen der Plattform (6) auf das Verbindungselement oder die Verbindungselemente (8) in einer ersten Richtung zu, sodass das Verbindungselement oder die Verbindungselemente (8) in der Plattform (6) auf die Kanäle oder Durchgangslöcher (7) treffen, wobei das Verbindungselement oder die Verbindungselemente (8) die Kanäle oder Löcher (7) passieren, bis sich die Plattform (6) dicht am Aktuator (2) oder der zweiten Maschineneinheit (4, 5) befindet und ein Teil des Verbindungselements oder der Verbindungselemente (8) die Kanäle oder Durchgangslöcher (7) in der Plattform vollständig passiert hat;
i) Führen des Verriegelungselements (9) in einer senkrecht zur ersten Richtung verlaufenden Richtung, sodass das Verriegelungselement (9) an der Plattform (6) anliegt und gleichzeitig mit einem Teil des Verbindungselements oder der Verbindungselemente (8) in Eingriff kommt, die die Kanäle oder Durchgangslöcher in der Plattform (6) passiert haben, sodass verhindert wird, dass die Plattform (6) entgegengesetzt zur ersten Richtung zurückgeführt werden kann, sodass der Aktuator (2), die Plattform (6) und die zweite Maschineneinheit (4, 5) eine Baugruppe bilden.

## Revendications

1. Ensemble (1) qui comprend :
a) une première unité formant machine sous la forme d'un dispositif de mise en oeuvre (2), lequel dispositif de mise en oeuvre (2) comprend un moyen de puissance pour agir sur une unité formant machine comme une vanne et ;
b) une seconde unité formant machine (4, 5) telle qu'une unité de commande (5), par exemple, pour le dispositif de mise en oeuvre (2) ou une vanne (4) ;
c) une plate-forme (6) placée entre le dispositif de mise en oeuvre (2) et la seconde unité formant machine (4, 5), plate-forme (6) par l'intermédiaire de laquelle le dispositif de mise en oeuvre (2) est relié à la seconde unité formant machine (4, 5) de sorte que la plate-forme (6) est reliée tant au dispositif de mise en oeuvre (2) qu'à la seconde unité formant machine (4, 5), laquelle plate-forme (6) étant munie de canaux ou de trous traversants (7) ;
d) des éléments d'accouplement allongés (8), qui sont attachés dans l'un du dispositif de mise en oeuvre (2) ou de la seconde unité formant machine (4, 5), et s'étendent à travers les canaux ou les trous traversants (7) de la plate-forme (6) dans une première direction ;
e) un élément de verrouillage (9) qui met en prise un ou plusieurs éléments d'accouplement allongés (8) et qui est ajusté de façon amovible de sorte qu'il est mobile en s'écartant de l'élément ou des éléments d'accouplement allongés (8) dans une direction principalement perpendiculaire à la première direction, de sorte que l'élément de verrouillage (9) et l'élément d'accouplement ou les éléments d'accouplement (8) relient la plate-forme (6) à l'un du dispositif de mise en oeuvre (2) et de la seconde unité formant machine (4, 5) tant que l'élément de verrouillage (9) met en prise l'élément d'accouplement ou les éléments d'accouplement (8).

2. Ensemble (1) selon la revendication 1, **caractérisé en ce que** les éléments d'accouplement allongés (8) comprennent des vis (10) avec des écrous (11) qui ne peuvent pas être perdus et **en ce que** l'élément de verrouillage (9) consiste en une plaque de fixation (9) avec des fentes (12) adaptées au diamètre des vis (10), un premier côté (13) de la plaque de fixation (9) se situant près de la plate-forme (6) et les écrous (11) se situant près d'un second côté (14) de la plaque de fixation (9) quand les écrous sont serrés.

3. Ensemble (1) selon la revendication 2, **caractérisé en ce que** la plate-forme (6) est munie de trous traversants (7) et **en ce que** les vis (10) des éléments d'accouplement (8) sont munies d'ergots de guidage (15), les dimensions de ces ergots de guidage (15) correspondent aux dimensions des trous (7) et **en ce que** les écrous (11) des vis (10) ont une dimension extérieure qui est inférieure aux dimensions des trous (7), de sorte que les écrous (11) peuvent être guidés à travers les trous traversants (7) de la plate-forme (6).

4. Ensemble selon la revendication 1, **caractérisé en ce que** l'élément de verrouillage (9) se situe près de la plate-forme (6) lorsque l'élément de verrouillage (9) est dans la position de mise en prise avec un ou plusieurs des éléments d'accouplement (8).

5. Ensemble selon la revendication 2, **caractérisé en ce que** les écrous (11) des vis ne peuvent pas être perdus, **en ce que** les vis (10) présentent des extrémités qui sont munies d'un méplat, de sorte que le diamètre des extrémités des vis (10) dépasse un diamètre intérieur des écrous (11).

6. Ensemble selon la revendication 2, **caractérisé en ce que** les écrous (11) des vis (10) ne peuvent pas être perdus, **en ce que** les écrous (11) sont reliés de manière fixe aux vis (10) et **en ce que** chaque élément d'accouplement (8) comprend un ergot de guidage (15) avec un filetage intérieur qui correspond au filet extérieur de la vis (10).

7. Jeu d'accouplement pour accoupler une première unité formant machine à une seconde unité formant machine, lequel jeu d'accouplement comprend une plate-forme (6) avec un ou plusieurs canaux ou trous traversants (7), une plaque de fixation (9) qui est munie d'une ou plusieurs fentes (12) qui peuvent être faites pour coïncider avec les canaux ou les trous traversants de la plate-forme (6), lesquelles fentes (12) présentant une largeur le long d'au moins une partie de leur extension qui est inférieure à une dimension du canal ou du trou traversant (7) avec lequel la fente doit coïncider, et un ou plusieurs éléments d'accouplement allongés (8), lesquels éléments d'accouplement (8) comprennant chacun une vis (10) et un écrou (11) appartenant à la vis (10), l'écrou (11) ayant une dimension extérieure qui est inférieure à la dimension des canaux ou des trous traversants (7) dans la plate-forme (6), de sorte que les écrous (11) peuvent être guidés à travers le canal / les canaux (7) ou le trou / les trous (7) et la dimension extérieure de chaque écrou (11) dépassant la largeur de la fente lorsque la fente (12) coïncide avec le canal ou le trou traversant (7) appartenant à la fente (12) dans le bloc (6), de sorte que la plaque de fixation (9) peut mettre en prise l'élément d'accouplement ou les éléments d'accouplement (8).

8. Jeu d'accouplement selon la revendication 7, **caractérisé en ce que** la plaque de fixation (9) est agencée de façon pivotante sur la plate-forme (6), la fente (12) ou les fentes (12) étant agencées de sorte que la fente ou les fentes (12) peuvent être faites pour coïncider avec les canaux ou les trous traversants (7) dans la plate-forme en faisant pivoter la plaque de fixation (9).

9. Jeu d'accouplement selon la revendication 7, **caractérisé en ce que** la plaque de fixation (9) consiste en un élément qui est détaché de la plate-forme (6).

10. Jeu d'accouplement selon l'une quelconque des revendications 7 à 9, **caractérisé en ce que** le jeu d'accouplement est conçu de sorte que la plaque de fixation (9) se situe près de la plate-forme (6) lorsque la plaque de fixation (9) est dans une telle position que sa fente ou ses fentes (12) coïncident avec les canaux ou les trous traversants (7) dans la plate-forme (6).

11. Procédé pour accoupler une première unité formant machine sous la forme d'un dispositif de mise en oeuvre (2) à une seconde unité formant machine (4, 5), lequel procédé comprend les étapes suivantes :
a) la fourniture d'un dispositif de mise en oeuvre (2) qui inclut un moyen de puissance pour agir sur une unité formant machine externe comme une vanne (4) ;
b) la fourniture d'une seconde unité formant machine (4, 5) ;
c) la fourniture d'une plate-forme (6) qui est munie de canaux ou de trous traversants (7) ;
d) la fourniture d'un ou plusieurs éléments d'accouplement allongés (8) ;
e) la fourniture d'au moins un élément de verrouillage (9) qui a une forme correspondant à la forme de l'élément d'accouplement ou des éléments d'accouplement allongés (8), de sorte que l'élément de verrouillage (9) peut mettre en prise l'élément d'accouplement ou les éléments d'accouplement (8) ;
f) l'accouplement soit du dispositif de mise en oeuvre (2) à la plate-forme (6) soit de la seconde unité formant machine (4, 5) à la plate-forme (6) de sorte que la plate-forme (6) forme une unité avec soit le dispositif de mise en oeuvre (2) soit la seconde unité formant machine (4, 5) ;
g) la fixation de l'élément d'accouplement ou des éléments d'accouplement (8) dans l'unité du dispositif de mise en oeuvre (2) et de la seconde unité formant machine (4, 5) qui n'est pas encore accouplée à la plate-forme (6) ;
h) le guidage de la plate-forme (6) vers l'élément d'accouplement ou les éléments d'accouplement (8) dans une première direction de sorte que l'élément d'accouplement ou les éléments d'accouplement (8) rencontrent les canaux ou les trous traversants (7) dans la plate-forme (6), l'élément d'accouplement ou les éléments d'accouplement (8) passant à travers les canaux ou les trous (7) jusqu'à ce que la plate-forme (6) se situe près du dispositif de mise en oeuvre (2) ou de la seconde unité formant machine (4, 5) et qu'une partie de l'élément d'accouplement ou des éléments d'accouplement (8) soit passée totalement à travers les canaux ou les trous traversants (7) dans la plate-forme ;
i) le guidage de l'élément de verrouillage (9) dans une direction perpendiculaire à la première direction de sorte que l'élément de verrouillage (9) est ainsi fait pour se situer contre la plate-forme (6) et pour mettre en prise en même temps une partie de l'élément d'accouplement ou des éléments d'accouplement (8) qui sont passés à travers les canaux ou les trous traversants dans la plate-forme (6), de sorte que la plate-forme (6) est ainsi empêchée d'être guidée en arrière dans le sens opposé au premier sens de sorte que le dispositif de mise en oeuvre (2), la plate-forme (6) et la seconde unité formant machine (4, 5) forment ainsi un ensemble.
